# EUROPEAN PATENT SPECIFICATION

(11) **EP 3 848 740 B1**
(45) Date of publication and mention of the grant of the patent: **29.11.2023**
(21) Application number: 19870780.4
(22) Date of filing: 19.08.2019
(51) Int. Cl.: H04N 5/20, G02B 7/02, H04N 23/55, G02B 13/00

(54) **INTEGRATED LENS BARREL, OPTICAL LENS, CAMERA MODULE, AND ASSEMBLY METHOD**
INTEGRIERTER OBJEKTIVTUBUS, OPTISCHE LINSE, KAMERAMODUL UND MONTAGEVERFAHREN
BARILLET D'OBJECTIF INTÉGRÉ, LENTILLE OPTIQUE, MODULE DE CAMÉRA, ET PROCÉDÉ D'ASSEMBLAGE

(30) Priority: 09.10.2018 CN 201811171784; 09.10.2018 CN 201821631668 U
(43) Date of publication of application: 14.07.2021
(73) Proprietor: Ningbo Sunny Opotech Co., Ltd., Ningbo, Zhejiang 315400 (CN)
(72) Inventor: CHEN, Zhenyu, Ningbo, Zhejiang 315400 (CN); ZHOU, Kailun, Ningbo, Zhejiang 315400 (CN); CHU, Shuijia, Ningbo, Zhejiang 315400 (CN); JIANG, Heng, Ningbo, Zhejiang 315400 (CN); LIU, Lin, Ningbo, Zhejiang 315400 (CN)
(74) Representative: Office Freylinger
(86) International application number: PCT/CN2019/101274
(87) International publication number: WO 2020/073735

(56) References cited:
- WO-A1-2018/154421
- WO-A1-2018/171656
- CN-A- 104 363 814
- CN-A- 104 363 814
- CN-U- 205 594 216
- CN-U- 207 051 569
- CN-U- 207 249 220
- CN-U- 207 340 018
- CN-U- 207 408 652
- CN-Y- 201 083 870
- JP-A- S6 165 212
- JP-A- 2013 205 808
- KR-A- 20140 076 761
- US-A1- 2011 058 265

## Description

### CROSS REFERENCES TO RELEVANT APPLICATIONS

### TECHNICAL FIELD

The present application relates to field of optical imaging technology. Specifically, this application relates to an integrated lens barrel, an optical camera lens, a camera module and an assembly method thereof.

### BACKGROUND

With the development of mobile phones, computers and other terminals, the various requirements of users have been greatly improved, especially with the development of mobile phones, users' pursuit of shooting quality has led manufacturers to develop personalized and customized camera modules, such as a camera lens with a large aperture, a large wide angle, and a large number of lenses that solve aberrations. On one hand, this makes the optical design more and more complex; on the other hand, the complex optical system is more sensitive, which raises big challenge to the manufacturing yield and product quality. Because the optical system of a camera module with a large aperture and a large wide angle is more sensitive, the reliability of its manufacturing process and verification process will be more fragile than conventional designs. Therefore, now there is a need for an optical camera lens with a better structure.

On the other hand, in order to meet the more and more extensive market requirements, high pixels, small size, and large aperture are the irreversible development trends of existing camera modules. However, it is very difficult to achieve the three requirements of high pixels, small size, and large aperture in a same camera module. For example, the compact development of mobile phones and the increase in the proportion of mobile phone screens have made a space for a front camera module inside the mobile phone smaller and smaller. However, the market has proposed higher and higher requirements for imaging quality of camera module.

In the field of compact camera modules (for example, camera modules for mobile phones), it is often necessary to consider the quality of an optical imaging camera lens and the manufacturing errors in the module assembling process. Specifically, in the manufacturing process of an optical imaging camera lens, the factors affecting the resolution of the camera lens come from errors of each element and its assembly, an error of a thickness of a lens spacer element, an error of assembly fitting of each camera lens, and a change of refractive index of the camera lens material, etc. Because there are many factors that affect the resolution of the camera lens, which exist in multiple elements, the control of each factor has a limit of manufacturing accuracy. If only the accuracy of each element is improved, the improvement ability is limited, the improvement cost is high, and it cannot meet market's increasing requirements for image quality.

The applicant proposes an assembly method, which includes: adjusting and determining a relative position of upper and lower sub-lens based on an active calibration process, and then bonding the upper and lower sub-lens together according to the determined relative position, thereby manufacturing a complete optical camera lens or camera module. This solution can improve the process capability index (CPK) of mass-produced optical camera lenses or camera modules; it can loosen the requirements for the accuracy of each element of the material (such as the sub-lens or photosensitive assembly used to assemble optical camera lenses or camera modules) and its assembly accuracy, thereby reducing an overall cost of the optical imaging camera lens and camera module; it can adjust various aberrations of the camera module in real time during the assembly process, thereby reducing defective rate, reducing production costs, and improving imaging quality.

However, actively calibrating an optical system of a camera lens itself is a new production process, in actual mass production, it is necessary to consider many factors such as the reliability, drop resistance, weather resistance and production cost of the optical camera lens and camera module, and sometimes it is necessary to face a decline in yield caused by various unpredictable factors. The applicant believes that improving the structural reliability of optical camera lenses manufactured based on an active calibration process is an important direction for thinking about improving the imaging quality and yield of such optical camera lenses. Therefore, there is an urgent need for a solution that can improve the structural reliability of an optical camera lens manufactured based on an active calibration process.

US 2011/058265 A1 refers to a fixed-focus lens module.

CN 205 594 216 U refers to a module of making a video recording and camera lens thereof.

KR 2014 0076761 A refers to a lens module.

CN 207 051 569 U refers to a scanning camera lens.

WO 2018/171656 A1 refers to a split lens and camera module and electronic apparatus. Further prior art can be found in WO 2018/154421 A1 and JP S61 65212 A.

### SUMMARY OF THE INVENTION

The present disclosure provides an integrated lens barrel according to claim 1, an optical camera lens according to claim 5, and an assembly method of optical camera lens according to claim 12. Some features of optional or preferred embodiments are recited in the dependent claims. The purpose of the present application is to provide a solution that can overcome at least one defect of the prior art.

According to an aspect of the present application, there provides an integrated lens barrel, as defined in claim 1, characterized by comprising: a cylindrical body having an inner side surface and a central axis; and an inner extension portion, wherein the inner extension portion extends from the inner side surface to the central axis and the middle of the inner extension portion has a light through hole, and the inner extension portion divides the inner side surface into a first section and a second section, and a top surface of the inner extension portion and the first section constitute a first groove suitable for accommodating a first lens group, and a bottom surface of the inner extension portion and the second section constitute a second groove suitable for accommodating a second lens group.

Wherein, the first section has a notched ring shape in a top view.

Wherein, the top surface of the inner extension portion is suitable for arranging glue material.

Wherein, the second section has multiple steps, and the multiple steps are suitable for successively embedding multiple second lenses to assemble the second lens group; and the bottom surface of the inner extension portion is suitable for bearing the second lens group, and the top surface of the inner extension portion is suitable for arranging glue material to bond the first lens group.

According to another aspect of the present application, there also provides an optical camera lens, characterized by comprising: an integrated lens barrel including a cylindrical body having an inner side surface and a central axis; and an inner extension portion, wherein the inner extension portion extends inward from the inner side surface and the middle of the inner extension portion has a light through hole, and the inner extension portion divides the inner side surface into a first section and a second section, and a top surface of the inner extension portion and the first section constitute a first groove, and a bottom surface of the inner extension portion and the second section constitute a second groove; a first lens group including a single first lens or multiple first lenses assembled together by integrating or bonding between lenses; a second lens group including at least one second lens, the second lens group bearing against the bottom surface of the inner extension portion and being placed in the second groove, and the first lens group and the first lens group together forming an imageable optical system; and a first glue material located between the first lens group and the first groove.

Wherein, the cured first glue material supports and fixes the first lens group and the integrated lens barrel, so that a relative position of the first lens group and the second lens group is maintained at a relative position determined by an active calibration based on an imaging result of the optical system.

Alternatively, not within the claimed scope, the first section has a closed ring shape in a top view.

Alternatively, not within the claimed scope, the first section has a concave segment, and the concave segment is recessed from the inner side surface of the cylindrical body to the outer side surface of the cylindrical body.

Wherein, the top surface of the cylindrical body is bonded with a light shielding plate, and the light shielding plate forms a diaphragm, and no glue material is filled between the light shielding plate and the first lens group.

Wherein, the first lens group includes an optical region and a structural region surrounding the optical region, the top surface of the structural region is bonded with a light shielding plate, the light shielding plate forms a diaphragm, and no glue material is filled between the light shielding plate and the top surface of the cylindrical body.

Wherein, the first section has a notched ring shape in a top view.

Wherein, the top surface of the cylindrical body is bonded with a light shielding plate to form a diaphragm, the light shielding plate has a side baffle that fits the notch, and no glue material is filled between the light shielding plate and the first lens group.

Wherein, the first lens group includes an optical region and a structural region surrounding the optical region, the top surface of the structural region is bonded with a light shielding plate to form a diaphragm, the light shielding plate has a side baffle that fits the notch, and no glue material is filled between the light shielding plate and the top surface of the cylindrical body.

Wherein, the light shielding plate is made of metal material or a material suitable for appearance surface.

Wherein, the light shielding plate is made of the same material as the integrated lens barrel, and the material for bonding the light shielding plate is the same as that of the first glue material.

Wherein, the first lens group includes an optical region and a structural region surrounding the optical region, the outer surface of the structural region is attached with a light shielding layer, and the top surface of the structural region is higher than the top surface of the integrated lens barrel.

Wherein, the light shielding layer shields visible light and transmits invisible light in a specific wavelength band, and the invisible light in the specific wavelength band is the light that triggers the curing reaction of the first glue material.

Wherein, the second section has multiple steps, and the multiple steps are suitable for successively embedding multiple second lenses to assemble the second lens group.

Wherein, the cylindrical body and the inner extension portion are integrally molded.

According to another aspect of the present application, there also provides a camera module, as defined in claim 5, comprising any of the aforementioned optical camera lens.

According to another aspect of the present application, there also provides an assembly method of an optical camera lens, as defined in claim 13, comprising: mounting a second lens group in an integrated lens barrel to constitute a second camera lens component, wherein the integrated lens barrel includes a cylindrical body and an inner extension portion, the cylindrical body has an inner side surface and a central axis, the inner extension portion extends inwardly from the inner side surface and the middle of the inner extension portion has a light through hole, the inner extension portion divides the inner side surface into a first section and a second section, wherein a top surface of the inner extension portion and the first section constitute a first groove, a bottom surface of the inner extension portion and the second section constitute a second groove, the second lens group includes at least one second lens, the second lens group bears against the bottom surface of the inner extension portion and is placed in the second groove; placing the first lens group in the first groove, wherein the first lens group includes a single first lens or multiple first lenses assembled together by an interaction of the lenses themselves; pre-positioning the first lens group and the second camera lens component so that the first lens group and the second lens group constitute an imageable optical system; actively calibrating a relative position of the first lens group and the second lens group based on an actual measurement imaging results; and bonding the first lens group and the first groove by a first glue material, and making the relative position of the first lens group and the second lens group to be maintained at the relative position determined by the active calibration, thereby obtaining the optical camera lens.

Wherein, the first section has a closed ring shape in a top view; in the pre-positioning and the active calibration, the first lens group is clamped by a clamp to move, wherein there is a gap between the first section and the side surface of the first lens group for accommodating the clamp.

Wherein, the first section has a notched ring shape in a top view; in the pre-positioning and the active calibration, the first lens group is clamped by a clamp to move, wherein the clamp stretches into the integrated lens barrel through the notch and clamps the first lens group.

Wherein, the second section has multiple steps; mounting the second lens group in the integrated lens barrel includes: sequentially embedding the at least one second lens to the multiple steps to assemble the second lens group, and forming the second camera lens component.

Wherein, in the step of bonding the first lens group and the first groove by a first glue material, the first glue material is only arranged between a bottom surface of the first lens group and the top surface of the inner extension portion; or the first glue material is not only arranged between the bottom surface of the first lens group and the top surface of the inner extension portion, but also arranged between the side surface of the first lens group and the first section.

Wherein, the first lens group includes an optical region and a structural region surrounding the optical region; the assembly method of optical camera lens further includes: adhering a light shielding plate to a top surface of the structure region, and no glue material is filled between the light shielding plate and a top surface of the cylindrical body.

Wherein, the assembly method of optical camera lens further includes: adhering a light shielding plate to a top surface of the cylindrical body, and no glue material is filled between the light shielding plate and a top surface of the first lens group.

Wherein, the light shielding plate is adhered after bonding the first lens group and the first groove by the first glue material.

Wherein, bonding the first lens group and the first groove by the first glue material includes the steps of glue arranging, exposure and baking performed successively; the step of adhering the light shielding plate is performed after the step of exposure and before the step of baking.

According to another aspect of the present application, there also provides an assembly method of camera module, characterized by comprising: assembling an optical camera lens using any of the aforementioned assembly method of optical camera lens; and assembling a camera module based on the optical camera lens.

Compared with prior art, this application has at least one of the following technical effects:
1. The present application can reduce source of variation of an optical camera lens based on an active calibration process, thereby improving the imaging quality and yield.
2. In the present application, an integrated lens barrel can be used instead of a split lens barrel, which provides high mechanical reliability of an optical camera lens based on an active calibration, and can suppress variation of optical performance caused by baking, high temperature and high humidity conditions.
3. In the present application, a light shielding layer that does not transmit visible light and can transmit invisible light in a specific wavelength band can be attached to the first lens group, so that an exposure can be performed from directly above when the glue material is cured, and this exposure manner is more uniform than a side exposure, which helps to improve the imaging quality of the optical camera lens.
4. In the present application, a light shielding plate of metal material can be used to reduce the height of an optical camera lens or camera module.
5. In the present application, a light shielding plate can be used as an appearance surface to reduce the height of an optical camera lens or camera module and reducing the assembly process.

### BRIEF DESCRIPTION OF THE DRAWINGS

Exemplary examples are shown in the referenced drawings. The examples and drawings disclosed herein should be regarded as illustrative rather than restrictive.
Fig.1 shows a cross-sectional schematic view of an example of an optical camera lens 1000;
Fig.2 shows a cross-sectional schematic view of an example of an optical camera lens 1000;
Fig.3 shows an optical camera lens based on an active calibration using a split lens barrel in a comparative example;
Fig.4 shows a top schematic view of an integrated lens barrel 300 in one example, not within the claimed scope;
Fig.5 shows a cross-sectional schematic view of the integrated lens barrel 300 shown in Fig.4;
Fig.6 shows a top schematic view of an integrated lens barrel 300 in an embodiment of the present application;
Fig.7 shows a cross-sectional schematic view of the integrated lens barrel 300 shown in Fig.6;
Fig.8 shows a schematic view of an optical camera lens using an integrated lens barrel 300 shown in Fig.6 in one embodiment of the present application;
Fig.9 shows an optical camera lens in one modified embodiment of the present application;
Fig.10 shows an optical camera lens in another modified embodiment of the present application;
Fig.11 shows a top schematic view of an integrated lens barrel 300 in one modified embodiment of the present application;
Fig.12 shows an optical camera lens in another modified embodiment of the present application;
Fig.13 shows an optical camera lens in another modified embodiment of the present application;
Fig.14A shows a relative position adjustment manner in an active calibration in one embodiment of the present application;
Fig.14B shows a rotation adjustment in an active calibration in another embodiment of the present application;
Fig.14C shows a relative position adjustment manner added with adjustment in v and w directions in an active calibration in another embodiment of the present application.

### DETAILED DESCRIPTION OF EMBODIMENTS

In order to better understand the present application, various aspects of the present application will be described in more detail with reference to the drawings. It should be understood that these detailed descriptions are only descriptions of exemplary embodiments of the present application, and are not intended to limit the scope of the present application in any way. Throughout the specification, the same reference numerals refer to same elements. The expression "and/or" includes any and all combinations of one or more of the associated listed items.

It should be noted that in this specification, expressions such as first, second, etc. are only used to distinguish one feature from another feature, and do not represent any restriction on the feature. Therefore, without departing from the teaching of the present application, the first subject discussed below may also be referred to as the second subject.

In the drawings, the thickness, size, and shape of objects have been slightly exaggerated for ease of description. The drawings are only examples and are not drawn strictly to scale.

It should also be understood that the terms "including", "includes", "having", "containing" and/or "contains", when used in this specification, mean that the stated features, bodies, steps, operations, elements and/or components exists, but does not exclude the presence or addition of one or more other features, bodies, steps, operations, elements, components and/or their combinations. In addition, when expressions such as "at least one of" appear after the list of listed features, the entire listed feature is modified instead of individual elements in the list. In addition, when describing the embodiments of the present application, the use of "may" means "one or more embodiments of the present application". And, the term "exemplary" is intended to refer to an example or illustration.

As used herein, the terms "substantially", "approximately", and similar terms are used as approximate terms, not as terms representing degree, and are intended to illustrate the inherent deviation in the calculated value or the measurement that will be recognized by those skilled in the art.

Unless otherwise defined, all terms (including technical terms and scientific terms) used herein have the same meanings as commonly understood by those skilled in the art to which this application belongs. It should also be understood that terms (such as those defined in commonly used dictionaries) should be interpreted as having meanings consistent with their meanings in the context of related technologies, and will not be interpreted in an idealized or excessively formal sense unless this is clearly defined in this article.

It should be noted that the embodiments in this application and the features in the embodiments can be combined with each other if there is no conflict. Hereinafter, the present application will be described in detail with reference to the drawings and in conjunction with embodiments.

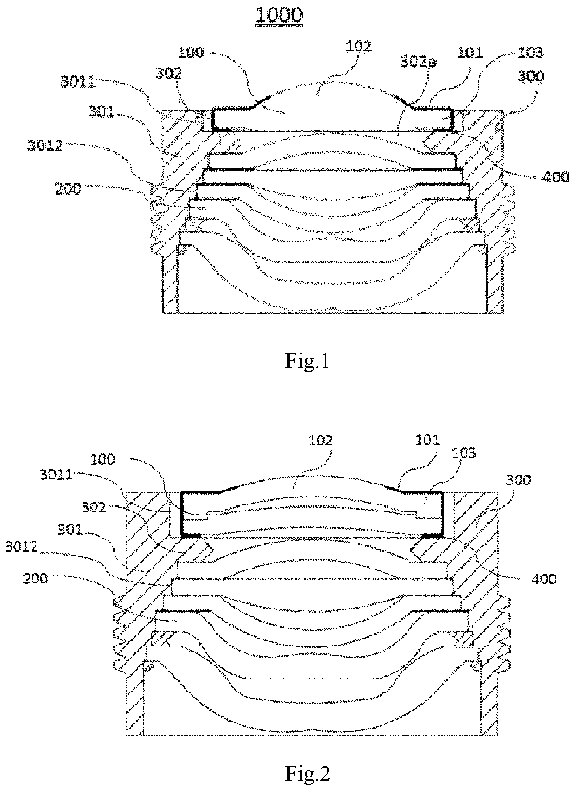

Fig.1 shows a cross-sectional schematic view of an optical camera lens 1000. As shown in Fig.1, the optical camera lens 1000 includes an integrated lens barrel 300, a first lens group 100, a second lens group 200 and a first glue material 400. Wherein, the integrated lens barrel 300 includes a cylindrical body 301 and an inner extension portion 302 formed by extending from an inner side surface of the cylindrical body 301. The cylindrical body 301 and the inner extension portion 302 are integrally formed. Further, referring to Fig.1, the cylindrical body 301 has an inner side surface and a central axis. The inner extension portion 302 extends from the inner side surface to the central axis and has a light through hole 302a in the middle thereof. The inner extension portion 302 divides the inner side surface into a first section 3011 and a second section 3012, wherein the top surface of the inner extension portion 302 and the first section 3011 form a first groove, and the bottom surface of the inner extension portion 302 and the second section 3012 form a second groove. The first lens group 100 is formed by a single first lens. It should be noted that the present application is not limited to this. For example, Fig.2 shows a cross-sectional schematic view of an optical camera lens 1000 in another example. Here, the first lens group 100 can be formed by multiple first lenses assembled together by an interaction of the lenses themselves (for example, formed by multiple first lenses integrated or bonded to each other). The second lens group 200 includes at least one second lens. The second lens group 200 bears against the bottom surface of the inner extension portion 302 and is placed in the second groove, the first lens group 100 and the second lens group 200 together form an imageable optical system. The first glue material 400 is located between the first lens group 100 and the first groove. The first glue material 400 is suitable for supporting and fixing the first lens group 100 and the integrated lens barrel 300 after being cured, so that a relative position of the first lens group 100 and the second lens group 200 is maintained at a relative position determined by an active calibration based on the imaging result of the optical system.

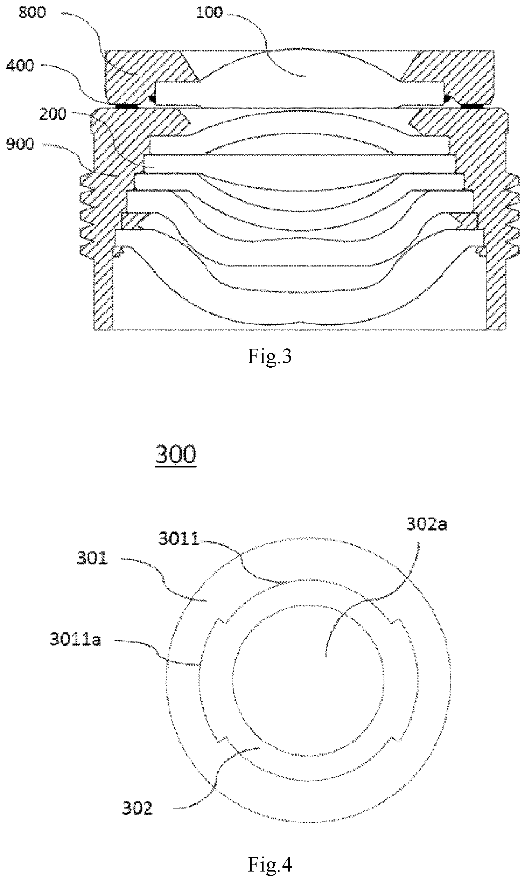

Here, the integrated lens barrel 300 is used instead of the split lens barrel, which provides high mechanical reliability of the optical camera lens based on the active calibration, and can suppress the variation of optical performance caused by baking, high temperature and high humidity conditions (due to reducing of source of variation under baking and other conditions). Further, Fig.3 shows an optical camera lens based on an active calibration using a split lens barrel in a comparative example. Referring to Fig.3, the optical camera lens includes a first camera lens component and a second camera lens component, wherein the first camera lens component includes a first lens barrel 800 and a first lens mounted in the first lens barrel 800, and the second camera lens component includes a second lens barrel 900 and multiple second lenses mounted in the second lens barrel 900. The first camera lens component and the second camera lens component are each calibrated as a whole and a relative position of the two is determined, and then the first camera lens component and the second camera lens component are bonded by the first glue material 400 to support and fix the first camera lens component and the second camera lens component. Under this scheme, a structural strength of the lens barrel (especially the first lens barrel 800) is relatively insufficient, resulting in low mechanical reliability. Under baking, high temperature and high humidity conditions, both the first glue material 400 and the lens barrel (especially the first lens barrel 800) may vary, resulting the relative position of the first lens and the second lens to change, thereby losing (or reducing) the optical performance obtained by the active calibration (that is, the optical performance variation). The integrated lens barrel 300 used in the present application can overcome the above-mentioned problems.

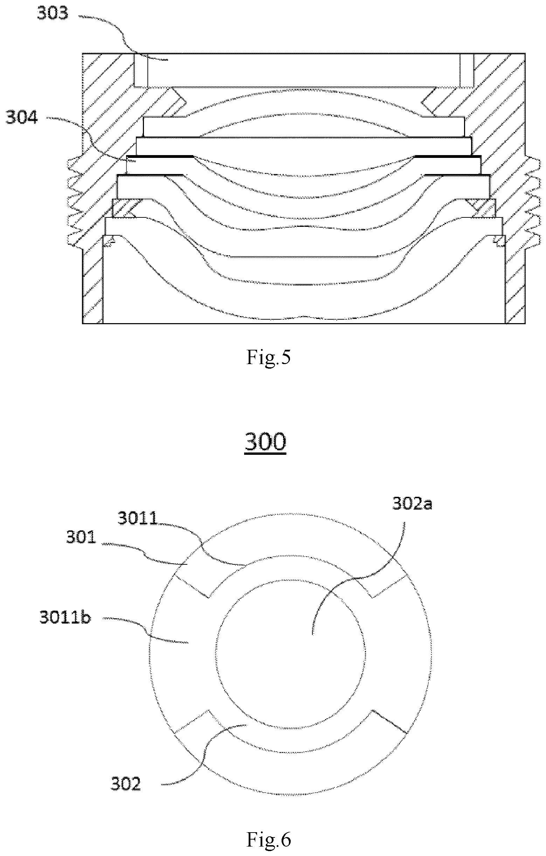

Further, Fig.4 shows a top schematic view of an integrated lens barrel 300 in an example, not within the claimed scope. Referring to Fig.4, the first section 3011 has a closed ring shape in a top view. The first section 3011 has a concave segment 3011a, and the concave segment 3011a is recessed from the inner side surface of the cylindrical body 301 to the outer side surface of the cylindrical body 301. Fig.5 shows a cross-sectional schematic view of the integrated lens barrel 300 shown in Fig.4. Referring to Fig.1, Fig.4 and Fig.5, it can be seen that the first section 3011 of the inner side surface of the integrated lens barrel 300 has a concave segment 3011a, and there is a gap between the concave segment 3011a and the outer side surface of the first lens group 100, and the gap can accommodate a clamping jaw so that the clamping jaw clamps the first lens group 100 for actively calibration in the first groove 303. It should be noted that in Fig.5, the second lens group 200 has been embedded to the second groove 304 of the integrated lens barrel 300.

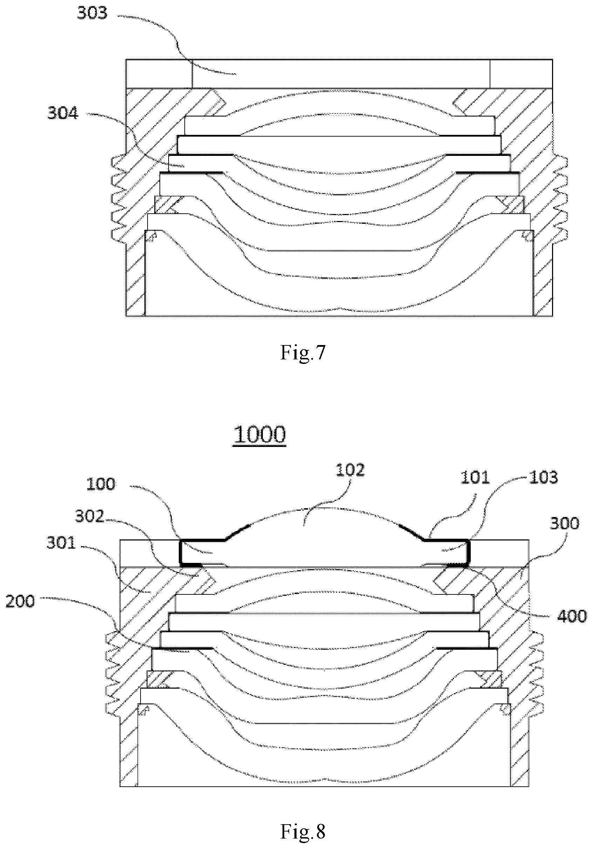

Further, Fig.6 shows a top schematic view of an integrated lens barrel 300 in an embodiment of the present application. Referring to Fig.6, in an embodiment of the present application, the first section 3011 has a notched ring shape in a top view. Since the first section 3011 has a notch 3011b, the integrated lens barrel 300 can avoid the clamping jaw, so that the clamping jaw clamps the first lens group 100 for active calibration in the first groove. Further, Fig.7 shows a cross-sectional schematic view of the integrated lens barrel 300 shown in Fig.6. Fig.8 shows a schematic view of an optical camera lens using the integrated lens barrel 300 shown in Fig.6 in one embodiment of the present application.

Further, still referring to Fig.1, in one embodiment of the present application, the second section 3012 has multiple steps, and the multiple steps are suitable for successively embedding multiple second lenses to assemble the second lens group 200. In other words, after the assembly is completed, the integrated camera lens and multiple second lenses form an integral second camera lens component, the first lens group 100 alone constitutes the first camera lens component, and the active calibration described above is to calibrate the relative position of the first camera lens component and the second camera lens component.

Further, still referring to Fig.1, in one embodiment of the present application, the surface of the structural region 103 of the first lens group 100 (including the top surface and the side surface of the structural region 103, and sometimes can further include the bottom surface of the structural region 103) is attached with a light shielding layer 101. The structural region 103 is a region surrounding an optical region 102. The optical region 102 is a region of the lens group for optical imaging. The light shielding layer 101 can be a coating that does not transmit visible light but only transmits ultraviolet light. In this way, a first glue material 400 can be a glue material that is triggered by ultraviolet light to be cured. The coating (that is, the light shielding layer 101) does not transmit visible light to shield stray light or act as a diaphragm, and its structure is compact, and an exposure can be performed from directly above (that is, ultraviolet light is transmitted from the light shielding layer 101) when the glue material is cured, which is more uniform than the side exposure. In contrast, in the split lens barrel scheme of the aforementioned comparative example, due to the shielding of the upper first lens barrel 800, it is necessary to expose from the side to cure the first glue material 400. It should be noted that the first glue material 400 can also be a glue material that is triggered by other wavelength bands to be cure, and at this time, the light shielding layer 101 does not transmit visible light but only transmits light in the wavelength bands that trigger the curing of the first glue material 400.

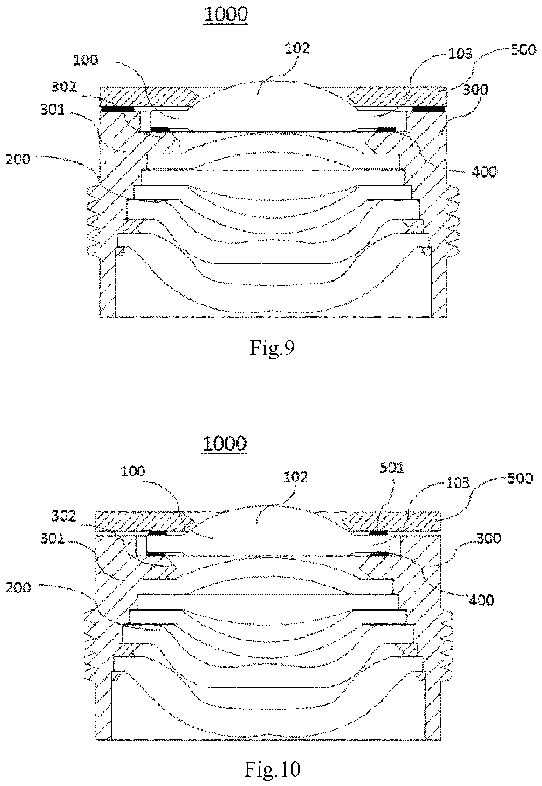

Further, Fig.9 shows an optical camera lens of one modified embodiment of the present application. In this embodiment, on the basis of the embodiment in Fig.1, a light shielding plate 500 is added. Accordingly, in this embodiment, a first lens (or a first lens group 100) can also not be attached with a light shielding layer. Specifically, in this embodiment, the light shielding plate 500 can be bonded to a top surface of an integrated lens barrel 300 (referring to a top surface of the cylindrical body 301). The light shielding plate 500 is not in contact with the first lens (a gap is left between the two, and no glue material is used for bonding). In this embodiment, the light shielding mechanism (that is, the light shielding plate 500) does not participate in the assembly process involving active calibration, therefore, there is no need for height measurement, and the surface roughness does not need to be made small to ensure high measurement accuracy, and scratches are reduced (the smoother, the easier it is to scratch). On the other hand, since the light shielding mechanism can be separated from the lenses (for comparison, in the aforementioned comparative example, the first lens barrel 800 achieves light shielding function) and it is no longer bonded to the lenses, the selection of its material is no longer limited by the lower group lens barrel (that is, the second lens barrel) (for comparison, in the aforementioned comparative example, it has been considered that the linear expansion coefficients of the two sides bonded by the glue material are close to reduce the performance variation of the optical system under conditions such as baking). Therefore, the material of the light shielding plate 500 can be metal, so that the light shielding plate 500 can be made thinner. The material of the light shielding plate 500 can also be PET polyester, which has stable mechanical and chemical properties and can be directly used as an appearance surface. For comparison, in the aforementioned comparative example, the final optical camera lens finished product needs to add a PET polyester material sheet on the outermost surface of the camera lens as the appearance surface.

Further, Fig.10 shows an optical camera lens in another modified embodiment of the present application. In this embodiment, a light shielding plate 500 is also added on the basis of the embodiment in Fig.1. In addition, in this embodiment, a first lens (or a first lens group 100) can also not be attached with a light shielding layer. The difference with the embodiment shown in Fig.9 is that, in this embodiment, the light shielding plate 500 is bonded to a top surface of a structural region 103 of a first lens (or a first lens group 100). However, there is an air gap between the light shielding plate 500 and a top surface of a cylindrical body 301, that is, no glue material is arranged between the two. In this embodiment, the light shielding mechanism (that is, the light shielding plate 500) does not participate in the assembly process involving active calibration, therefore, there is no need for height measurement, and the surface roughness does not need to be made small to ensure high measurement accuracy, and scratches are reduced (the smoother, the easier it is to scratch). The light shielding mechanism in this embodiment is preferably made of the same material as an integrated lens barrel 300, and a glue material is also selected from the same material as the integrated lens barrel and upper group lens, that is, a glue material 501 for bonding the light shielding mechanism is of the same material as a first glue material 400. And its purpose is to make the variation of the glue material on both sides of the first lens group 100 consistent under conditions such as baking, so as to minimize the degradation of the optical system performance as much as possible.

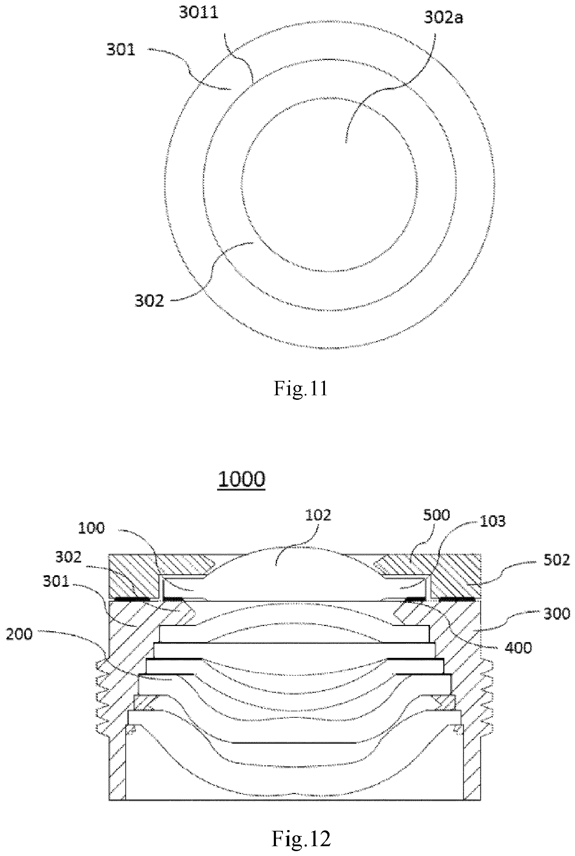

Further, Fig.11 shows a top schematic view of an integrated lens barrel 300 in one modified embodiment of the present application. In this embodiment, the first section 3011 of the integrated lens barrel 300 has a ring shape and has no concave segment. In this embodiment, the diameter of the first section 3011 can be larger than the diameter of an outer side surface of a first lens (or a first lens group 100), so as to form a space for accommodating a clamping jaw between the first section 3011 and the outer side surface of the first lens (or the first lens group 100), thereby avoiding the clamping position of the clamping jaw. At a position where there is no need to avoid the clamping jaw, the outer side surface of the first lens (or the first lens group 100) can optionally being applied a glue material to bond with the integrated lens barrel 300.

Further, Fig.12 shows an optical camera lens in another modified embodiment of the present application. Compared with the embodiments shown in Fig.6 to 8, this embodiment differs in that a light shielding plate 500 is added, and the light shielding plate 500 has a side baffle 502 adapted to a notch of a first section 3011. In this embodiment, the first lens (or the first lens group 100) can also not be attached with a light shielding layer. Specifically, in this embodiment, the light shielding plate 500 can be bonded to the top surface of a cylindrical body 301. The light shielding plate 500 is not in contact with the first lens (a gap is left between the two, and no glue material is used for bonding). In this embodiment, the light shielding mechanism (that is, the light shielding plate 500) does not participate in the assembly process involving active calibration, therefore, there is no need for height measurement, and the surface roughness does not need to be made small to ensure high measurement accuracy, and scratches are reduced. On the other hand, since the light shielding mechanism can be separated from the lenses and it is no longer bonded to the lenses, the selection of its material is no longer limited by the lower group lens barrel (that is, the second lens barrel). Therefore, the material of the light shielding plate 500 can be metal, so that the light shielding plate 500 can be made thinner. The material of the light shielding plate 500 can also be PET polyester, which has stable mechanical and chemical properties and can be directly used as an appearance surface. For comparison, in the aforementioned comparative example, the final optical camera lens finished product needs to add a PET polyester material sheet on the outermost surface of the camera lens as the appearance surface.

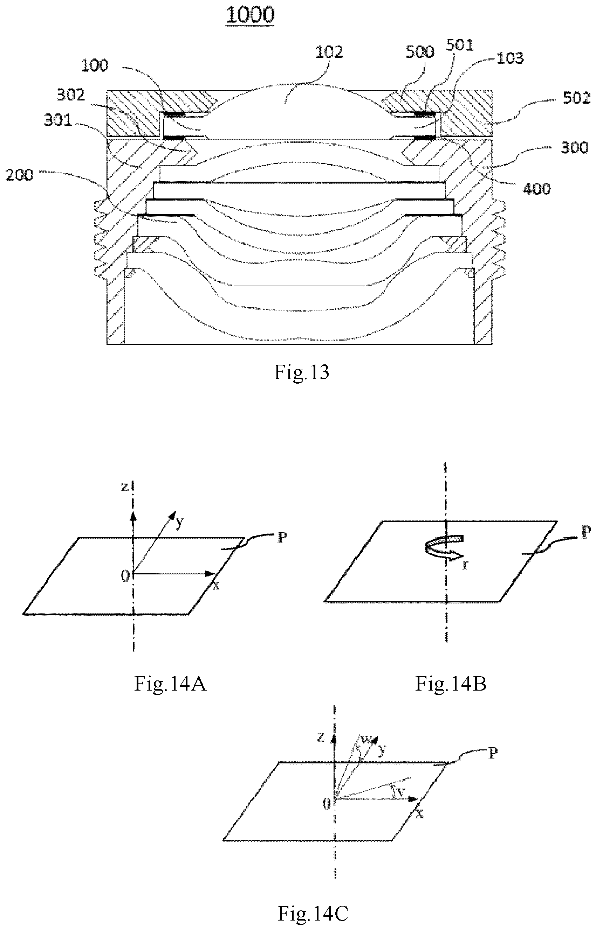

Further, Fig.13 shows an optical camera lens in another modified embodiment of the present application. Compared with the embodiments shown in Figs.6 to 8, this embodiment differs in that a light shielding plate 500 is added, and the light shielding plate 500 has a side baffle 502 adapted to a notch of a first section 3011. In this embodiment, the first lens (or the first lens group 100) can also not be attached with a light shielding layer. The difference with the embodiment shown in Fig.12 is that, in this embodiment, the light shielding plate 500 is bonded to a top surface of a structural region 103 of a first lens (or a first lens group 100). There is an air gap between the light shielding plate 500 and a top surface of a cylindrical body 301, that is, no glue material is arranged between the two. In this embodiment, the light shielding mechanism (that is, the light shielding plate 500) does not participate in the assembly process involving active calibration, therefore, there is no need for height measurement, and the surface roughness does not need to be made small to ensure high measurement accuracy, and scratches are reduced (the smoother, the easier it is to scratch). The bonded light shielding mechanism in this embodiment is preferably made of the same material as an integrated lens barrel 300, and a glue material is also selected from the same material as the integrated lens barrel and upper group lens, that is, a glue material 501 for bonding the light shielding mechanism is of the same material as a first glue material 400. And its purpose is to make the variation of the glue material on both sides of the first lens group 100 consistent under conditions such as baking, so as to minimize the degradation of the optical system performance as much as possible.

Further, in one embodiment, the top surface of the inner extension portion 302 is suitable for arranging glue material, for example, the inner extension portion 302 has a certain size in a direction perpendicular to the central axis, so as to arrange the glue material.

According to another embodiment of the present application, a camera module is also provided, and the camera module can include the optical camera lens of any one of the aforementioned embodiments.

According to another embodiment of the present application, an optical camera lens assembly method is also provided, which includes the following steps.
S100, mounting a second lens group in an integrated lens barrel to constitute a second camera lens component, wherein the integrated lens barrel includes a cylindrical body and an inner extension portion, the cylindrical body has an inner side surface and a central axis, the inner extension portion extends inwardly from the inner side surface and the middle of the inner extension portion has a light through hole, the inner extension portion divides the inner side surface into a first section and a second section, wherein the top surface of the inner extension portion and the first section forms a first groove, the bottom surface of the inner extension portion and the second section forms a second groove, the second lens group includes at least one second lens, the second lens group bears against the bottom surface of the inner extension portion and is placed in the second groove;
S200, placing the first lens group in the first groove, wherein the first lens group includes a single first lens or multiple first lenses assembled together by an interaction of the lenses themselves;
S300, pre-positioning the first lens group and the second camera lens component so that the first lens group and the second lens group constitute an imageable optical system;
S400, actively calibrating a relative position of the first lens group and the second lens group based on an actual measurement imaging results; and
S500, bonding the first lens group and the first groove by a first glue material, and making the relative position of the first lens group and the second lens group to be maintained at the relative position determined by the active calibration, thereby obtaining the optical camera lens.

Further , in one example, not within the claimed scope, the first section 3011 has a closed ring shape in a top view, at the time of pre-positioning the first lens group and the second camera lens component in step S300 and actively calibrating a relative position of the first lens group and the second lens group based on an actual measurement imaging results in S400, the first lens group 100 is clamped by a clamp to move, wherein there is a gap between the first section 3011 and the side surface of the first lens group 100 for accommodating the clamp.

Further, in one embodiment, the first section 3011 has a notched ring shape in a top view, at the time of pre-positioning the first lens group and the second camera lens component in step S300 and actively calibrating a relative position of the first lens group and the second lens group based on an actual measurement imaging results in S400, the first lens group 100 is clamped by a clamp to move, wherein the clamp stretches into the integrated lens barrel 300 through the notch and clamps the first lens group 100.

Further, in one embodiment, the second section 3012 has multiple steps, and at the time of mounting the second lens group 200 in the integrated lens barrel 300 in step S100, the at least one second lens are sequentially embedded to the multiple steps to assemble the second lens group 200, and the second camera lens component is formed.

Further, in one embodiment, at the time of bonding the first lens group 100 and the first groove by a first glue material 400 in step S500, the first glue material 400 is only arranged between a bottom surface of the first lens group 100 and the top surface of the inner extension portion 302. In another embodiment, in step S500, the first glue material 400 is not only arranged between the bottom surface of the first lens group 100 and the top surface of the inner extension portion 302, but also arranged between the side surface of the first lens group 100 and the first section 3011.

Further, in one embodiment, the assembly method further includes step S600.

S600, adhering a light shielding plate 500 to a top surface of the first lens group 100, wherein no glue material is filled between the light shielding plate 500 and a top surface of the cylindrical body 301. In this embodiment, after the step (S500) of bonding the first lens group 100 and the first groove by the first glue material 400 is completed, the step (S600) of adhering the light shielding plate 500 can be performed.

In another embodiment, the step S600 can be replaced with S600'.

S600', adhering a light shielding plate 500 to a top surface of the cylindrical body 301, wherein no glue material is filled between the light shielding plate 500 and a top surface of the first lens group 100. In this embodiment, after the step (S500) of adhering the first lens group 100 and the first groove by the first glue material 400 is completed, the step (S600') of adhering the light shielding plate 500 can be performed.

Further, in one embodiment, step S500 can include glue arranging, exposure and baking performed successively, and adhering the light shielding plate 500 can be performed after exposure and before baking. Wherein glue arranging is to arrange the first glue material 400 on the top surface of the inner extension portion 302, and exposure is to trigger the curing reaction of the first glue material 400 by ultraviolet light (or other wavelength bands of light), so that the first glue material 400 can temporarily support and fix a relative position of a first camera lens component and the second camera lens component (that is, the relative position of the first lens group 100 and the integrated lens barrel 300). Baking is to put the optical camera lens temporarily supported and fixed into an oven (or other equipments) for baking, so that the first glue material 400 is permanently cured, thereby improving the structural strength and reliability of the optical camera lens.

Further, according to another embodiment of the present application, there is also provided an assembly method of camera module, which includes assembling an optical camera lens using the assembly method of optical camera lens of any of the aforementioned embodiments, and then mounting the assembled optical camera lens on the photosensitive assembly, to obtain a finished camera module.

In this description, the concepts of lens barrel, integrated lens barrel, first lens barrel, second lens barrel and so on all refer to a lens barrel as a black object, and these lens barrels all have a light shielding effect.

In the present application, the integrated lens barrel 300 can be mounted in an optical actuator (for example, a motor). For example, the integrated lens barrel 300 can be mounted on the inner side surface of the motor carrier, thereby forming a whole with the motor. During active calibration, the first lens group 100 serves as one component (can be regarded as the first camera lens component), and the second lens group 200, the integrated lens barrel 300 and a motor serve as another component (can be regarded as the second camera lens component), the active calibration is performed between the two camera lens components.

The following will further introduce the active calibration process used in the assembly method of optical camera lens or camera module.

Further, the active calibration described in the present application can adjust the relative position of the first camera lens component 100 and the second camera lens component 200 at multiple degrees of freedom. Fig.14A shows a relative position adjustment manner in an active calibration in one embodiment of the present application. In this adjustment manner, the first camera lens component 100 (or the first lens 101) can move along the x, y, and z directions relative to the second camera lens component 200 (that is, the relative position adjustment in this embodiment has three degrees of freedom). Wherein the z direction is the direction along the optical axis, and the x and y directions are the directions perpendicular to the optical axis. The x and y directions are both in an adjustment plane P, and a translation in the adjustment plane P can be decomposed into two components in the x and y directions.

Fig.14B shows a rotation adjustment in an active calibration in another embodiment of the present application. In this embodiment, in addition to the three degrees of freedom in Fig.14A, the relative position adjustment is further added with a degree of freedom in rotation, that is, an adjustment in a r direction. In this embodiment, the adjustment in the r direction is the rotation in the adjustment plane P, that is, the rotation around an axis perpendicular to the adjustment plane P.

Further, Fig.14C shows a relative position adjustment manner added with adjustment in v and w directions in an active calibration in another embodiment of the present application. Wherein, the v direction represents a rotation angle of the xoz plane, and the w direction represents a rotation angle of the yoz plane, the rotation angles of the v direction and the w direction can be combined into a vector angle, and this vector angle represents a total tilt state. That is to say, by adjusting the v and w directions, a tilt posture of the first camera lens component relative to the second camera lens component can be adjusted (that is, a tilt of the optical axis of the first camera lens component relative to the optical axis of the second camera lens component).

The adjustment of the six degrees of freedom of x, y, z, r, v, and w may all affect the imaging quality of the optical system (for example, affect the magnitude of the resolution). In other embodiments of the present application, the relative position adjustment manner can be to adjust only any one of the above six degrees of freedom, or a combination of any two or more of them.

Further, in one embodiment, in the active calibration step, the adjustment of the relative position of the first camera lens component and the second camera lens component includes a translation on the adjustment plane, that is, the movements in the x, y directions.

Further, in one embodiment, in the active calibration step, the adjustment of the relative position of the first camera lens component and the second camera lens component further includes: adjusting and determining an included angle between the axis of the first camera lens component and the axis of the second camera lens component according to an actual measured resolution of the optical system, that is, the adjustment in the w and v directions. In the assembled optical camera lens or camera module, the included angle between the axis of the first camera lens component and the axis of the second camera lens component can be non-zero.

Further, in one embodiment, in the active calibration step, the adjustment of the relative position of the first camera lens component and the second camera lens component further includes: moving the first camera lens component along a direction perpendicular to the adjustment plane (that is, adjustment in the z direction), according to the actual measured resolution of the optical system, determining the relative position between the first camera lens component and the second camera lens component in the direction perpendicular to the adjustment plane.

Further, in one embodiment, the first camera lens component may also not have a first lens barrel. For example, the first camera lens component can be composed of a single first lens. Before the active calibration, pre-positioning is first performed so that there is a gap between a bottom surface of the first lens and a top surface of the second camera lens component; then the active calibration is performed, and then the glue material is arranged in the gap and the glue material is cured. In this embodiment, the first lens can be formed by multiple sub-lenses that are integrated or bonded with each other to form a whole. In this embodiment, a side surface and a top surface of a non-optical surface of the first lens that are not used for imaging can form a light shielding layer 101. The light shielding layer 101 can be formed by screen printing a light shielding material on the side and top surface of the first lens. Compared with the scheme of the embodiment with an upper cover and a split lens barrel (black object), this embodiment can reduce the size of the camera module head (on the object side) that originally encroached on the screen of the mobile phone, so that when the camera module is mounted in the mobile phone, it can be closer to the side wall (or other frame) of the mobile phone to achieve a higher screen-to-body ratio.

Further, still referring to Fig.1, in one embodiment, the top surface of the structural region 103 of the first lens group 100 is higher than the top surface of the integrated lens barrel 300. Wherein, the top surface refers to an end surface on a side of an object. This design can make the top surface of the lens barrel lower than the top surface of the lens, in this way, when the camera module is mounted in the mobile phone, the lens barrel as a structural member has a smaller protrusion, and the size of the encroachment on the screen is smaller, which is beneficial to increase the screen-to-body ratio. For example, when the camera module is used as a front camera, the lower top surface of the lens barrel helps avoid screen assemblies, so that the screen extends closer to the frame of the mobile phone, thereby increasing the screen-to-body ratio.
in the active calibration step, the second camera lens component can be fixed, the first camera lens component can be clamped by a clamp, and the first camera lens component can be moved under a drive of a six-axis motion mechanism connected with the clamp, thereby realizing the relative movement between the first camera lens component and the second camera lens component in the above six degrees of freedom. Wherein the clamp can be leaned against or partially leaned against the side surface of the first camera lens component, thereby clamping the first camera lens component and performing position adjustment of multiple degrees of freedom.

The above description is only preferred embodiments of this application and an explanation of the applied technical principles. Those skilled in the art should understand that the scope of the application involved in this application is only defined by the following claims.

## Claims

1. An integrated lens barrel (300), comprising:
a cylindrical body (301) having an inner side surface and a central axis; and
an inner extension portion (302), wherein the inner extension portion (302) extends from the inner side surface to the central axis and the middle of the inner extension portion (302) has a light through hole (302a), and the inner extension portion (302) divides the inner side surface into a first section (3011) and a second section (3012), and a top surface of the inner extension portion (302) and the first section (3011) form a first groove suitable for accommodating a first lens group (100), and a bottom surface of the inner extension portion (302) and the second section (3012) form a second groove suitable for accommodating a second lens group (200);
**characterized in that** the first section (3011) has a notch (3011b) which penetrates a body of the first section (3011), and the notch (3011b) is configured to expose a side of the first lens group (100) in a direction perpendicular to the central axis.

2. The integrated lens barrel (300) of claim 1, wherein the first section (3011) has a notched ring shape in a top view.

3. The integrated lens barrel (300) of claim 1, wherein the top surface of the inner extension portion (302) is suitable for arranging glue material.

4. The integrated lens barrel (300) of claim 1, wherein the second section (3012) has multiple steps, and the multiple steps are suitable for successively embedding multiple second lenses to assemble the second lens group (200); and the bottom surface of the inner extension portion (302) is suitable for bearing the second lens group (200), and the top surface of the inner extension portion (302) is suitable for arranging glue material to bond the first lens group (100).

5. An optical camera lens, **characterized by** comprising:
an integrated lens barrel (300) as claimed in any one of claims 1 to 4;
the first lens group (100) including a single first lens or multiple first lenses assembled together by integrating or bonding between the multiple lenses;
the second lens group (200) including at least one second lens, the second lens group (200) bearing against the bottom surface of the inner extension portion (302) and being placed in the second groove, and the first lens group (100) and the first lens group (100) together forming an imageable optical system; and
a first glue material located between the first lens group (100) and the first groove.

6. The optical camera lens of claim 5, wherein the cured first glue material supports and fixes the first lens group (100) and the integrated lens barrel (300), so that a relative position of the first lens group (100) and the second lens group (200) is maintained at a relative position determined by an active calibration based on an imaging result of the optical system.

7. The optical camera lens of claim 5, wherein the first section (3011) has a notched ring shape in a top view.

8. The optical camera lens of claim 7, wherein the top surface of the cylindrical body (301) is bonded with a light shielding plate (500), and the light shielding plate (500) forms a diaphragm, and no glue material is filled between the light shielding plate (500) and the first lens group (100), or
the first lens group (100) includes an optical region (102) and a structural region (103) surrounding the optical region (102), and a top surface of the structural region (103) is bonded with a light shielding plate (500), and the light shielding plate (500) forms a diaphragm, and no glue material is filled between the light shielding plate (500) and the top surface of the cylindrical body (301).

9. The optical camera lens of claim 5, Er, wherein the first section (3011) has a notched ring shape in a top view.

10. The optical camera lens of claim 9, wherein a top surface of the cylindrical body (301) is bonded with a light shielding plate (500) to form a diaphragm, and the light shielding plate (500) has a side baffle (502) that fits the notch, and no glue material is filled between the light shielding plate (500) and the first lens group (100), or
the first lens group (100) includes an optical region (102) and a structural region (103) surrounding the optical region (102), and a top surface of the structural region (103) is bonded with a light shielding plate (500) to form a diaphragm, and the light shielding plate (500) has a side baffle (502) that fits the notch, and no glue material is filled between the light shielding plate (500) and the top surface of the cylindrical body (301).

11. The optical camera lens of claim 5, wherein the first lens group (100) includes an optical region (102) and a structural region (103) surrounding the optical region (102), and an outer surface of the structural region (103) is attached with a light shielding layer (101), and the top surface of the structural region (103) is higher than the top surface of the integrated lens barrel (300), preferably the light shielding layer (101) shields visible light and transmits invisible light in a specific wavelength band, and the invisible light in the specific wavelength band is the light that triggers the curing reaction of the first glue material.

12. An assembly method of optical camera lens, comprising: mounting a second lens group (200) in an integrated lens barrel as defined in claim 1, to constitute a second camera lens component, wherein the integrated lens barrel (300) includes a cylindrical body (301) and an inner extension portion (302), the cylindrical body (301) has an inner side surface and a central axis, the inner extension portion (302) extends inwardly from the inner side surface and the middle of the inner extension portion (302) has a light through hole (302a), the inner extension portion (302) divides the inner side surface into a first section (3011) and a second section (3012), wherein a top surface of the inner extension portion (302) and the first section (3011) form a first groove, a bottom surface of the inner extension portion (302) and the second section (3012) form a second groove, the second lens group (200) includes at least one second lens, the second lens group (200) bears against the bottom surface of the inner extension portion (302) and is placed in the second groove;
**characterized in that** the first section (3011) has a notch (3011b) which penetrates a body the first section (3011), and the notch (3011b) is configured to expose a side of the first lens group (100) in a direction perpendicular to the central axis;
placing the first lens group (100) in the first groove, wherein the first lens group (100) includes a single first lens or multiple first lenses assembled together by an interaction of the multiple lenses themselves;
pre-positioning the first lens group (100) and the second camera lens component so that the first lens group (100) and the second lens group (200) constitute an imageable optical system;
actively calibrating a relative position of the first lens group (100) and the second lens group (200) based on an actual measurement imaging results; and
bonding the first lens group (100) and the first groove by a first glue material, and making the relative position of the first lens group (100) and the second lens group (200) to be maintained at the relative position determined by the active calibration, thereby obtaining the optical camera lens.

13. The assembly method of optical camera lens of claim 12, wherein the first glue material is only arranged between a bottom surface of the first lens group (100) and the top surface of the inner extension portion (302); or the first glue material is not only arranged between the bottom surface of the first lens group (100) and the top surface of the inner extension portion (302), but also arranged between the side surface of the first lens group (100) and the first section (3011).

14. The assembly method of optical camera lens of claim 12, wherein the first lens group (100) includes an optical region (102) and a structural region (103) surrounding the optical region (102);
the assembly method of optical camera lens further includes:
adhering a light shielding plate (500) to a top surface of the structure region, wherein no glue material is filled between the light shielding plate (500) and a top surface of the cylindrical body (301), or
the assembly method of optical camera lens further includes:
adhering a light shielding plate (500) to a top surface of the cylindrical body (301), wherein no glue material is filled between the light shielding plate (500) and a top surface of the first lens group (100).

## Patentansprüche

1. Ein integrierter Linsentubus (300), umfassend:
einen zylindrischen Körper (301) mit einer inneren Seitenfläche und einer Mittelachse; und
einen inneren Verlängerungsteil (302), wobei sich der innere Verlängerungsteil (302) von der inneren Seitenfläche zu der Mittelachse erstreckt und die Mitte des inneren Verlängerungsteils (302) ein Lichtdurchgangsloch (302a) aufweist, und der innere Verlängerungsteil (302) die innere Seitenfläche in einen ersten Abschnitt (3011 ) und einen zweiten Abschnitt (3012) unterteilt, und wobei eine obere Fläche des inneren Verlängerungsteils (302) und der erste Abschnitt (3011) eine erste Nut bilden, die zur Aufnahme einer ersten Linsengruppe (100) geeignet ist, und wobei eine untere Fläche des inneren Verlängerungsteils (302) und der zweite Abschnitt (3012) eine zweite Nut bilden, die zur Aufnahme einer zweiten Linsengruppe (200) geeignet ist;
**dadurch gekennzeichnet, dass** der erste Abschnitt (3011) eine Kerbe (3011b) aufweist, die einen Körper des ersten Abschnitts (3011) durchdringt, und die Kerbe (3011b) so konfiguriert ist, dass sie eine Seite der ersten Linsengruppe (100) in einer Richtung senkrecht zur Mittelachse freilegt.

2. Integrierter Linsentubus (300) nach Anspruch 1, wobei der erste Abschnitt (3011) in einer Draufsicht eine gekerbte Ringform aufweist.

3. Integrierter Linsentubus (300) nach Anspruch 1, wobei die obere Fläche des inneren Verlängerungsteils (302) zum Anordnen von Klebematerial geeignet ist.

4. Integrierter Linsentubus (300) nach Anspruch 1, wobei der zweite Abschnitt (3012) mehrere Stufen aufweist und die mehreren Stufen geeignet sind, nacheinander mehrere zweite Linsen einzubetten, um die zweite Linsengruppe (200) zusammenzusetzen; und wobei die untere Fläche des inneren Verlängerungsteils (302) geeignet ist, die zweite Linsengruppe (200) zu tragen, und die obere Fläche des inneren Verlängerungsteils (302) geeignet ist, Klebematerial anzuordnen, um die erste Linsengruppe (100) zu verbinden.

5. Optisches Kameralinsens, **dadurch gekennzeichnet, dass** es umfasst:
einen integrierten Linsentubus (300), wie in einem der Ansprüche 1 bis 4 beansprucht;
die erste Linsengruppe (100), die eine einzelne erste Linse oder mehrere erste Linsen umfasst, die durch Integrieren oder Verbinden zwischen den mehreren Linsen zusammengesetzt sind;
die zweite Linsengruppe (200), die mindestens eine zweite Linse umfasst, wobei die zweite Linsengruppe (200) an der unteren Fläche des inneren Verlängerungsteils (302) anliegt und in der zweiten Nut angeordnet ist, und wobei die erste Linsengruppe (100) und die erste Linsengruppe (100) zusammen ein abbildbares optisches System bilden; und
ein erstes Klebematerial, das zwischen der ersten Linsengruppe (100) und der ersten Nut angeordnet ist.

6. Optisches Kameralinsens nach Anspruch 5, wobei das ausgehärtete erste Klebematerial die erste Linsengruppe (100) und den integrierten Linsentubus (300) trägt und fixiert, so dass eine relative Position der ersten Linsengruppe (100) und der zweiten Linsengruppe (200) in einer relativen Position gehalten wird, die durch eine aktive Kalibrierung auf der Grundlage eines Abbildungsergebnisses des optischen Systems bestimmt wird.

7. Optisches Kameralinsens nach Anspruch 5, wobei der erste Abschnitt (3011) in einer Draufsicht eine gekerbte Ringform aufweist.

8. Optisches Kameralinsens nach Anspruch 7, wobei die obere Fläche des zylindrischen Körpers (301) mit einer Lichtabschirmungsplatte (500) verbunden ist und die Lichtabschirmungsplatte (500) eine Irisblende bildet und kein Klebematerial zwischen der Lichtabschirmungsplatte (500) und der ersten Linsengruppe (100) gefüllt ist, oder
wobei die erste Linsengruppe (100) einen optischen Bereich (102) und einen den optischen Bereich (102) umgebenden strukturellen Bereich (103) umfasst und eine obere Fläche des strukturellen Bereichs (103) mit einer Lichtabschirmplatte (500) verbunden ist und die Lichtabschirmplatte (500) eine Irisblende bildet und kein Klebematerial zwischen der Lichtabschirmplatte (500) und der oberen Fläche des zylindrischen Körpers (301) gefüllt ist.

9. Optisches Kameralinsens nach Anspruch 5, wobei der erste Abschnitt (3011) in der Draufsicht eine gekerbte Ringform aufweist.

10. Optisches Kameralinsens nach Anspruch 9, wobei eine obere Fläche des zylindrischen Körpers (301) mit einer Lichtabschirmungsplatte (500) verbunden ist, um eine Irisblende zu bilden, und die Lichtabschirmungsplatte (500) eine seitliche Blende (502) aufweist, die in die Kerbe passt, und kein Klebematerial zwischen der Lichtabschirmungsplatte (500) und der ersten Linsengruppe (100) gefüllt ist, oder
wobei die erste Linsengruppe (100) einen optischen Bereich (102) und einen strukturellen Bereich (103), der den optischen Bereich (102) umgibt, umfasst, und eine obere Fläche des strukturellen Bereichs (103) mit einer Lichtabschirmungsplatte (500) verbunden ist, um eine Irisblende zu bilden, und die Lichtabschirmungsplatte (500) eine seitliche Blende (502) aufweist, die in die Kerbe passt, und kein Klebematerial zwischen der Lichtabschirmungsplatte (500) und der oberen Fläche des zylindrischen Körpers (301) gefüllt ist.

11. Optisches Kameralinsens nach Anspruch 5, wobei die erste Linsengruppe (100) einen optischen Bereich (102) und einen den optischen Bereich (102) umgebenden Strukturbereich (103) umfasst und eine äußere Fläche des Strukturbereichs (103) mit einer Lichtabschirmschicht (101) versehen ist, und wobei die obere Fläche des Strukturbereichs (103) höher ist als die obere Fläche des integrierten Linsentubus (300), wobei vorzugsweise die Lichtabschirmschicht (101) sichtbares Licht abschirmt und unsichtbares Licht in einem bestimmten Wellenlängenband durchlässt, und das unsichtbare Licht in dem bestimmten Wellenlängenband das Licht ist, das die Aushärtungsreaktion des ersten Klebstoffmaterials auslöst.

12. Verfahren zum Zusammenbau eines optischen Kameralinsens, umfassend:
Montieren einer zweiten Linsengruppe (200) in einem integrierten Linsentubus, wie in Anspruch 1 definiert, um eine zweite Kameralinsenkomponente zu bilden, wobei der integrierte Linsentubus (300) einen zylindrischen Körper (301) und einen inneren Verlängerungsteil (302) umfasst, wobei der zylindrische Körper (301) eine innere Seitenfläche und eine Mittelachse aufweist, der innere Verlängerungsteil (302) sich von der inneren Seitenfläche nach innen erstreckt und die Mitte des inneren Verlängerungsteils (302) ein Lichtdurchgangsloch (302a) aufweist, der innere Verlängerungsteil (302) die innere Seitenfläche in einen ersten Abschnitt (3011) und einen zweiten Abschnitt (3012) unterteilt, wobei eine obere Fläche des inneren Verlängerungsteils (302) und der erste Abschnitt (3011) eine erste Nut bilden, eine untere Fläche des inneren Verlängerungsteils (302) und der zweite Abschnitt (3012) eine zweite Nut bilden, wobei die zweite Linsengruppe (200) mindestens eine zweite Linse umfasst, die zweite Linsengruppe (200) an der unteren Fläche des inneren Verlängerungsteils (302) anliegt und in der zweiten Nut angeordnet ist;
**dadurch gekennzeichnet, dass** der erste Abschnitt (3011) eine Kerbe (3011b) aufweist, die einen Körper des ersten Abschnitts (3011) durchdringt, und wobei die Kerbe (3011b) so konfiguriert ist, dass sie eine Seite der ersten Linsengruppe (100) in einer Richtung senkrecht zu der Mittelachse freilegt;
Anordnen der ersten Linsengruppe (100) in der ersten Nut, wobei die erste Linsengruppe (100) eine einzelne erste Linse oder mehrere erste Linsen umfasst, die durch ein Zusammenwirken der mehreren Linsen selbst zusammengesetzt sind;
Vorpositionieren der ersten Linsengruppe (100) und der zweiten Kameralinsenkomponente, so dass die erste Linsengruppe (100) und die zweite Linsengruppe (200) ein abbildbares optisches System bilden;
aktives Kalibrieren einer relativen Position der ersten Linsengruppe (100) und der zweiten Linsengruppe (200) auf der Grundlage eines tatsächlichen Messabbildungsergebnisses; und
Verbinden der ersten Linsengruppe (100) und der ersten Nut durch ein erstes Klebematerial und Beibehalten der relativen Position der ersten Linsengruppe (100) und der zweiten Linsengruppe (200) an der relativen Position, die durch die aktive Kalibrierung bestimmt wurde, wodurch das optische Kameralinsens erhalten wird.

13. Verfahren zum Zusammenbau eines optischen Kameralinsens nach Anspruch 12, wobei das erste Klebematerial nur zwischen einer unteren Fläche der ersten Linsengruppe (100) und der oberen Fläche des inneren Verlängerungsteils (302) angeordnet ist; oder wobei das erste Klebematerial nicht nur zwischen der unteren Fläche der ersten Linsengruppe (100) und der oberen Fläche des inneren Verlängerungsteils (302), sondern auch zwischen der Seitenfläche der ersten Linsengruppe (100) und dem ersten Abschnitt (3011) angeordnet ist.

14. Verfahren zum Zusammenbau eines optischen Kameralinsens nach Anspruch 12,
wobei die erste Linsengruppe (100) einen optischen Bereich (102) und einen den optischen Bereich (102) umgebenden Strukturbereich (103) umfasst;
wobei das Verfahren zum Zusammenbau eines optischen Kameralinsens ferner umfasst:
Kleben einer Lichtabschirmungsplatte (500) an eine obere Fläche des Strukturbereichs, wobei kein Klebematerial zwischen der Lichtabschirmungsplatte (500) und einer oberen Fläche des zylindrischen Körpers (301) gefüllt wird, oder
wobei das Verfahren zum Zusammenbau des optischen Kameralinsens ferner umfasst:
Aufkleben einer Lichtabschirmungsplatte (500) auf eine obere Fläche des zylindrischen Körpers (301), wobei kein Klebematerial zwischen dem Lichtabschirmungsplatte (500) und einer oberen Fläche der ersten Linsengruppe (100) gefüllt wird.

## Revendications

1. Un barillet de lentille intégré (300), comprenant:
un corps cylindrique (301) ayant une surface latérale interne et un axe central; et
une partie d'extension interne (302), dans laquelle la partie d'extension interne (302) s'étend depuis la surface latérale interne jusqu'à l'axe central et le milieu de la partie d'extension interne (302) comporte un trou traversant (302a) pour la lumière, et la partie d'extension interne (302) divise la surface latérale interne en une première section (3011) et une deuxième section (3012), et une surface supérieure de la partie d'extension interne (302) et la première section (3011) forment une première rainure adaptée pour recevoir un premier groupe de lentilles (100), et une surface inférieure de la partie d'extension interne (302) et de la deuxième section (3012) forment une deuxième rainure adaptée pour recevoir un deuxième groupe de lentilles (200);
**caractérisé en ce que** la première section (3011) comporte une encoche (3011b) qui pénètre dans un corps de la première section (3011), et l'encoche (3011b) est configurée pour exposer un côté du premier groupe de lentilles (100) dans une direction perpendiculaire à l'axe central.

2. Le barillet de lentille intégré (300) selon la revendication 1, dans lequel la première section (3011) a une forme d'anneau cranté en vue de dessus.

3. Le barillet de lentille intégré (300) selon la revendication 1, dans lequel la surface supérieure de la partie d'extension interne (302) est adaptée pour disposer un matériau adhésif

4. Le barillet de lentille intégré (300) selon la revendication 1, dans lequel la deuxième section (3012) comporte de multiples étapes, et les multiples étapes sont adapté pour intégrer successivement plusieurs deuxièmes lentilles pour assembler le deuxième groupe de lentilles (200); et la surface inférieure de la partie d'extension interne (302) est adaptée pour supporter le deuxième groupe de lentilles (200), et la surface supérieure de la partie d'extension interne (302) est adaptée pour disposer un matériau adhésif pour lier le premier groupe de lentilles (100).

5. Une lentille de caméra optique, **caractérisé en ce qu'**il comprend:
un barillet de lentille intégré (300) selon l'une quelconque des revendications 1 à 4;
le premier groupe de lentilles (100) comprenant une seule première lentille ou plusieurs premières lentilles assemblées ensemble par intégration ou liaison entre les multiples lentilles;
le deuxième groupe de lentilles (200) comprenant au moins une deuxième lentille, le deuxième groupe de lentilles (200) s'appuyant contre la surface inférieure de la partie d'extension interne (302) et étant placé dans la deuxième rainure, et le premier groupe de lentilles (100) et le premier groupe de lentilles (100) formant ensemble un système optique imageable; et
un premier matériau adhésif se trouve entre le premier groupe de lentilles (100) et la première rainure.

6. La lentille de caméra optique selon la revendication 5, dans lequel le premier matériau de colle durci supporte et fixe le premier groupe de lentilles (100) et le barillet de lentille intégré (300), de telle sorte qu'une position relative du premier groupe de lentilles (100) et du deuxième groupe de lentilles (200) est maintenue à une position relative déterminée par un étalonnage actif basé sur un résultat d'imagerie du système optique.

7. La lentille de caméra optique selon la revendication 5, dans lequel la première section (3011) a une forme d'anneau cranté en vue de dessus.

8. La lentille de caméra optique selon la revendication 7, dans lequel la surface supérieure du corps cylindrique (301) est liée à une plaque de protection contre la lumière (500), et la plaque de protection contre la lumière (500) forme un diaphragme, et aucun matériau adhésif n'est rempli entre la plaque de protection contre la lumière (500) et le premier groupe de lentilles (100), ou
le premier groupe de lentilles (100) comprend une région optique (102) et une région structurelle (103) entourant la région optique (102), et une surface supérieure de la région structurelle (103) est liée à une plaque de protection contre la lumière (500), et la plaque de protection contre la lumière (500) forme un diaphragme, et aucun matériau adhésif n'est rempli entre la plaque de protection contre la lumière (500) et la surface supérieure du corps cylindrique (301).

9. La lentille de caméra optique selon la revendication 5, dans lequel la première section (3011) a une forme d'anneau cranté en vue de dessus.

10. La lentille de caméra optique selon la revendication 9, dans lequel une surface supérieure du corps cylindrique (301) est liée à une plaque de protection contre la lumière (500) pour former un diaphragme, et la plaque de protection contre la lumière (500) comporte un déflecteur latéral (502) qui s'adapte à l'encoche, et aucun matériau adhésif n'est rempli entre la plaque de protection contre la lumière (500) et le premier groupe de lentilles (100), ou
le premier groupe de lentilles (100) comprend une région optique (102) et une région structurelle (103) entourant la région optique (102), et une surface supérieure de la région structurelle (103) est liée à une plaque de protection contre la lumière (500) pour former un diaphragme, et la plaque de protection contre la lumière (500) comporte un déflecteur latéral (502) qui s'adapte à l'encoche, et aucun matériau adhésif n'est rempli entre la plaque de protection contre la lumière (500) et la surface supérieure du corps cylindrique (301).

11. La lentille de caméra optique selon la revendication 5, dans lequel le premier groupe de lentilles (100) comprend une région optique (102) et une région structurelle (103) entourant la région optique (102), et une surface externe de la région structurelle (103) est fixée avec une couche de protection contre la lumière (101), et la surface supérieure de la région structurelle (103) est plus haute que la surface supérieure du barillet de lentille intégré (300), de préférence, la couche de protection contre la lumière (101) protège la lumière visible et transmet la lumière invisible dans une bande de longueur d'onde spécifique, et la lumière invisible dans la bande de longueur d'onde spécifique est la lumière qui déclenche la réaction de durcissement du premier matériau adhésif.

12. Un procédé d'assemblage d'une lentille de caméra optique, comprenant :
monter un deuxième groupe de lentilles (200) dans un barillet de lentille intégré tel que défini dans la revendication 1, pour constituer un deuxième composant de lentille de caméra, dans lequel le barillet de lentille intégré (300) comprend un corps cylindrique (301) et une partie d'extension interne (302), le corps cylindrique (301) a une surface latérale interne et un axe central, la partie d'extension interne (302) s'étend vers l'intérieur à partir de la surface latérale interne et le milieu de la partie d'extension interne (302) a un trou traversant (302a) pour la lumière, la partie d'extension interne (302) divise la surface latérale interne en une première section (3011) et une deuxième section (3012), une surface supérieure de la partie d'extension interne (302) et la première section (3011) formant une première rainure , une surface inférieure de la partie d'extension interne (302) et la deuxième section (3012) forment une deuxième rainure, le deuxième groupe de lentilles (200) comprend au moins une deuxième lentille, le deuxième groupe de lentilles (200) s'appuie contre la surface inférieure de la partie d'extension interne (302) et est placé dans la deuxième rainure;
**caractérisé en ce que** la première section (3011) comporte une encoche (3011b) qui pénètre dans un corps de la première section (3011), et l'encoche (3011b) est configurée pour exposer un côté du premier groupe de lentilles (100) dans une direction perpendiculaire à l'axe central;
placer le premier groupe de lentilles (100) dans la première rainure, dans lequel le premier groupe de lentilles (100) comprend une seule première lentille ou plusieurs premières lentilles assemblées ensemble par une interaction des multiples lentilles elles-mêmes;
prépositionner le premier groupe de lentilles (100) et le deuxième composant de lentille de caméra de sorte que le premier groupe de lentilles (100) et le deuxième groupe de lentilles (200) constituent un système optique imageable;
calibrer activement une position relative du premier groupe de lentilles (100) et du deuxième groupe de lentilles (200) sur la base de résultats d'imagerie de mesure réels; et
lier le premier groupe de lentilles (100) et la première rainure à l'aide d'un premier matériau de adhésif, et maintenir la position relative du premier groupe de lentilles (100) et du second groupe de lentilles (200) à la position relative déterminée par l'étalonnage actif, ce qui permet d'obtenir la lentille de caméra optique.

13. Le procédé d'assemblage de lentille de caméra optique selon la revendication 12, dans lequel le premier matériau adhésif est disposé uniquement entre une surface inférieure du premier groupe de lentilles (100) et la surface supérieure de la partie d'extension interne (302); ou le premier matériau adhésif n'est pas seulement disposé entre la surface inférieure du premier groupe de lentilles (100) et la surface supérieure de la partie d'extension interne (302), mais également disposé entre la surface latérale du premier groupe de lentilles (100) et la première section (3011).

14. Le procédé d'assemblage de lentille de caméra optique selon la revendication 12, dans lequel le premier groupe de lentilles (100) comprend une région optique (102) et une région structurelle (103) entourant la région optique (102),
le procédé d'assemblage des lentilles de caméra optique comprend en outre :
coller une plaque de protection contre la lumière (500) sur une surface supérieure de la région de structure, dans lequel aucun matériau adhésif n'étant rempli entre la plaque de protection contre la lumière (500) et une surface supérieure du corps cylindrique (301), ou
le procédé d'assemblage des lentilles de caméra optique comprend en outre :
coller une plaque de protection contre la lumière (500) sur une surface supérieure du corps cylindrique (301), dans lequel aucun matériau adhésif n'étant rempli entre la plaque de protection contre la lumière (500) et une surface supérieure du premier groupe de lentilles (100).
